# EUROPEAN PATENT APPLICATION

(11) **EP 1 113 654 A2**
(43) Date of publication of application: **04.07.2001**
(21) Application number: 00311753.8
(22) Date of filing: 28.12.2000
(51) Int. Cl.: H04M 1/725

(54) **Cellular telephones and conventional telephones**

(30) Priority: 03.01.2000 US 476114
(71) Applicant: Wirefree, Tel Aviv 68012 (US)
(72) Inventor: Shoval, Seev, Tel Aviv 68012 (IL)
(74) Representative: Hoarton, Lloyd Douglas Charles

(57) **Abstract**

A system for allowing the attachment of a cellular telephone via an adaptor to a conventional telephone, such that cellular telephone connections utilize the speaker and microphone of the conventional telephone.

## Description

### Field of the Invention

The present invention relates to cellular telephones and to conventional telephones,

### Background of the Invention

The wide use of cellular telephones has raised concerns in respect of public health in that the user is Table to receive a dose of radiation from the antenna. Cellular telephones also give rise to practical problems in that they have a limited battery life and require regular recharging.

By contrast, conventional telephones do not suffer from the above problems, however they fail to fulfil the requirement of pottability.

In general, it person having both a conventional telephone and a cellular telephone has two telephone numbers, and whenever he is not located at his own conventional telephone he has to be reached using his cellular telephone number.

### Summary Of The Invention

In accordance with a first aspect of the present invention there is provided a connector for interfacing a cellular telephone to a conventional telephone, comprising an attachment for the cellular telephone and an attachment for the conventional telephone.

According to a second aspect of the present invention there is provided a system for interfacing a cellular telephone to a conventional telephone, and operative to direct signals therebetween so as to enable use of a speaker and microphone of the conventional telephone in a telephone connection directed via the cellular telephone. In an embodiment said cellular telephone and said conventional telephone each having a speaker and a microphone respectively, said connector being adapted to transfer electrical signals between said cellular telephone and said conventional telephone, such that said speaker and said mierophone of said conventional telephone serve as a speaker and a microphone respectively of said cellular telephone.

A further embodiment comprises a switch which is operable to disable the speaker and the microphone of the cellular telephone.

In another embodiment there is provided an attachment for a charger, the charger being operable to charge the cellular telephone.

In one embodiment, the attachment to the conventional telephone is a handset socket of said conventional telephone, and a handset of the conventional telephone is attachable to a further attachment on said connector.

Preferably, the attachment to the conventional telephone is a telephone line input socket of the conventional telephone.

According to third aspect of the present invention there is provided a cellular telephone and a conventional telephone, when connected together such that a speaker and a microphone of said conventional telephone serve as a speaker and microphone for said cellular telephone.

According to a fourth aspect of the present invention there is provided a method of using a cellular telephone comprising connecting said cellular telephone to a conventional telephone, dialing via said cellular telephone and speaking, and listening using a speaker and a microphone of said conventional telephone.

In an embodiment, the cellular telephone is connected via a handset socket of said conventional telephone.

In another embodiment the cellular telephone is connected via a telephone line input socket of the conventional telephone.

In a preferred embodiment there is provided the additional step of connecting a handset of the conventional telephone and the cellular telephone respectively to a connector, and connecting the connector to the handset socket of the conventional telephone.

### Brief Description of the Drawings

For a better understanding of the invention and to show how the same may be carried into effect, reference is now made, purely by way of example, to the accompanying drawings, in which
Fig. 1 is a generalized diagram of an embodiment of a device according to the present invention, and
Fig. 2 is a generalized block diagram showing the internal layout of a device according to the present invention.
Fig. 3 is a generalized block diagram showing the internal layout of another device according to the present invention.

### Description of the Preferred Embodiments

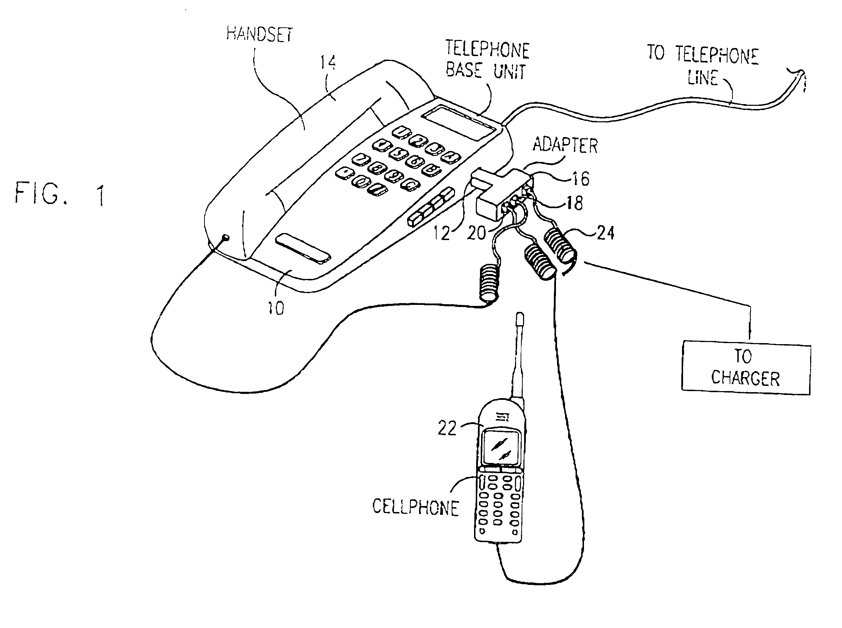

Reference is now made to Fig. 1, which is a generalized diagram showing an embodiment of the present invention. In Fig. 1 a standard telephone base unit 10 is connected in the normal way to a telephone line. The telephone base unit 10 comprises a socket 12 for attaching a handset 14. However, the handset 14 is not attached to socket 12. Instead, an adapter 16 is attached to the socket 12 in place of the handset 14. The adapter 16 itself has two further sockets 18 and 20. Socket 18 allows for connection of the handset 14 and socket 20 allows for connection of a cellular telephone 22.

The adapter 16 preferably contains a further socket 24 for attachment to a charger, allowing for charging of the cellular telephone 22 whilst it is attached to the conventional telephone.

A user is thus able to attach his cellular telephone to any conventional telephone having a comovable handset. He is then able to operate the cellular telephone and to speak via the telephone handset. The speaker and microphone of the cellular telephone are preferably disabled by a switching unit 42 of the adapter 16 during operation from the conventional telephone. Thus telephone calls may be made and received using the cellular network, via the handset of the conventional telephone, using the cellular telephone for dialing and transmitting only. Telephone charges are thus not diverted to the conventional telephone.

The user of the cellular telephone thus has all the advantages of mobility that he needs. In addition, when at home or in the office, he has the advantage of keeping the same number. Thus his contacts need only know his mobile number. In addition, because the conventional telephone line remains connected, calls from the conventional network can still be received as long as the cellular telephone 22 is not actually in use.

The user does not need the speaker and microphone of the cellular telephone 22, and thus the antenna of the cellular telephone can be kept at a distance from the user's head during the conversation. The head is thus not exposed to significant radiation. In addition, the battery can be recharged.

A further advantage is that in general, cellular telephones are being made progressively smaller, and have reached a stage where the microphone and speaker are not sufficiently far apart that one can be over the ear whilst the other is over the mouth. The telephone handset 14 is, by contrast, correctly sized for case of use.

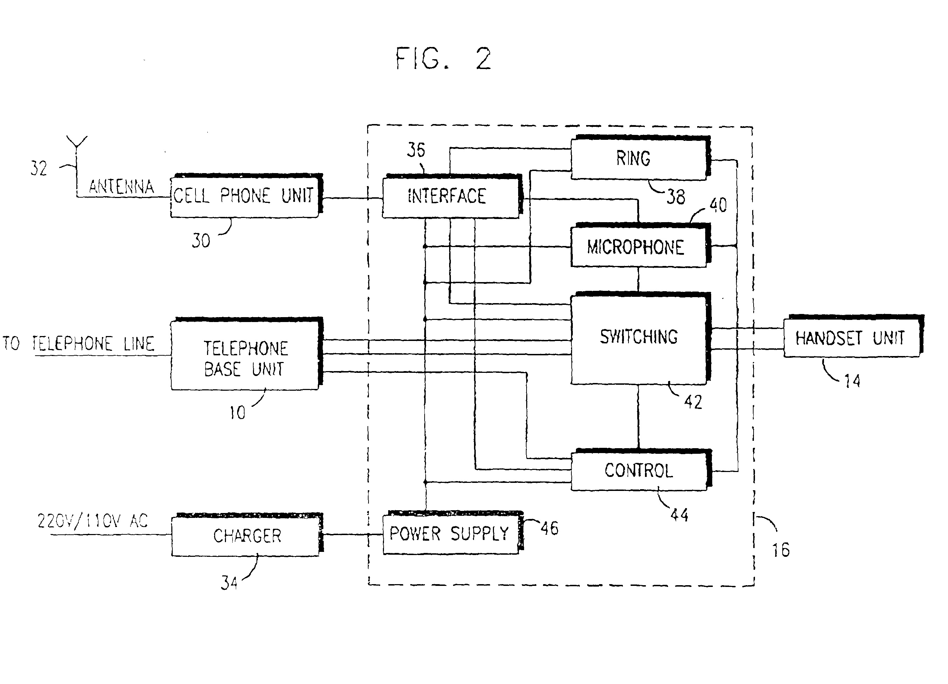

Reference is now made to Fig. 2, which is a generalized block diagram of a device according to an embodiment of the present invention. The cellular telephone of Fig. 1 is represented as a cellphone unit 30 and antenna 32. The cellphone unit 30, together with the handset unit 14 and the telephone base unit 10 are connected to the adapter 16. In addition a charger 34 is connected between the adapter 16 and the mains.

The adapter 16 comprises an interface 36, which buffers the cellular telephone 22, a ring unit 38, a microphone 40, a switching unit 42, a control unit 44 and a power supply 46. The power supply unit 46 allows the output of the charger to be regulated for the adapter itself and the cellular telephone 22. As mentioned above, the switching unit 42 operates to switch off the speaker and microphone of the cellular telephone. The control unit 44 operates the switching unit. The microphone and ring unit are provided, in a particularly preferred embodiment, to allow these functions to be taken over by the adapter.

In a preferred embodiment, the adapter comprises an indicator to show whether the conventional or the cellular connection is in operation.

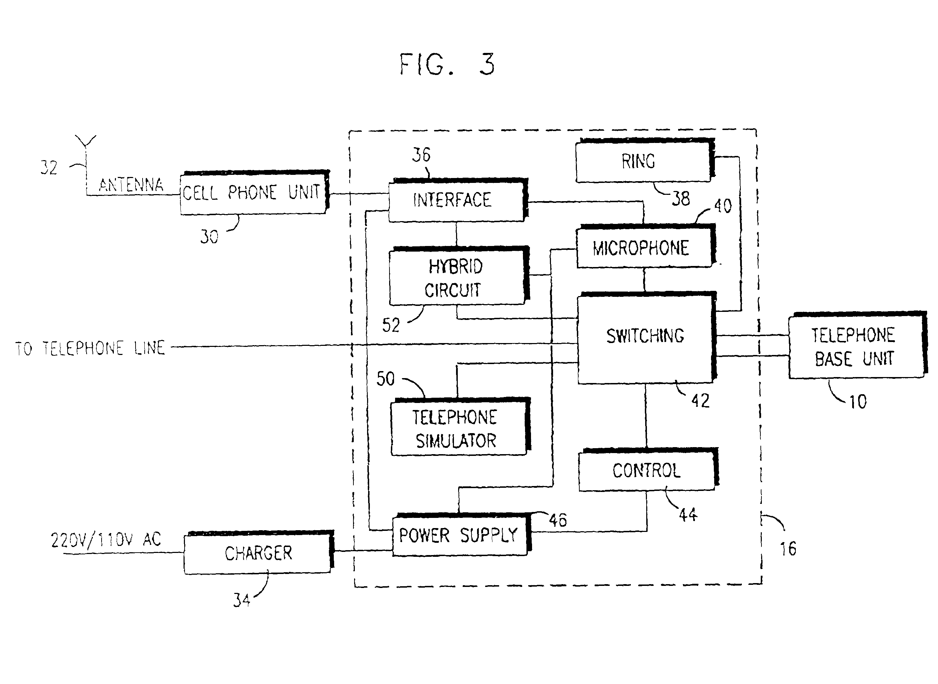

Reference is now made to Fig. 3, which is a generalized block diagram of a further embodiment of the present invention. In the embodiment of Fig. 3 parts that are the same as Fig. 2 are given the same reference numerals.

The adapter 16 is connected, not between the telephone base unit and the handset, as in the embodiments of Fig.s 1 and 2, but rather is connected between the telephone line connector socket and the base unit. The cellular phone is connected to the adapter 16 as before, however, the handset is connected directly to the base unit in the normal way, The output of the cellphone, which is an unmodulated voice signal, is sent via the adapter to the telephone base unit. In order for this signal to be suitable for the telephone base unit input, the adapter contains a telephone simulator 50 to convert the output of the cellphone into a telephone line signal. Following the interface 36 is a hybrid circuit 52, whose function is to interface between 2 and 4 wire connectors.

In the embodiment of Fig. 3, if the telephone base unit 10 is equipped with a loudspeaker, the loudspeaker can be used in conjunction with the cellular telephone.

It is appreciated that various features of the invention which arc, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention includes both combinations and subcombinations of the various features described hereinabove as well as variations and modifications thereof which would occur to persons skilled in the art upon reading the foregoing description and which are not in the prior art.

## Claims

1. A connector for interfacing a cellular telephone to a conventional telephone, comprising an attachment for the cellular telephone and an attachment for the conventional telephone.

2. A systern for interfacing a cellular telephone to a conventional telephone, and operative to direct signals therebetween so as to enable use of a speaker and microphone of the conventional telephone in n telephone connection directed via the collular telephone.

3. A connector according to claim 1, said cellular telephone and said conventional telephone each having a speaker and a microphone respectively, said connector being adapted to transfer electrical signals between said cellular telephone and said conventional telephone, such that said speaker and said microphone of said conventional telephone serve as a speaker and a microphone respectively of said cellular telephone.

4. A connector according to claim 3, comprising a switch, said switch being operable to disable said speaker and said microphone of said cellular telephone.

5. A connector according to claim 1 or claim 3 or claim 4, further comprising an attachment for a charger, said charger being operable to charge said cellular telephone.

6. A connector according to claim 1 or to any of claims 3 - 5, wherein said attachment to said conventional telephone is a handset socket of said conventional telephone, and wherein a handset of said conventional telephone is attachable to a further attachment on said connector.

7. A connector according to claim 1 or to any of claims 3 - 6, wherein said attachment to said conventional telephone is a telephone line input socket of said conventional telephone.

8. A cellular telephone and a conventional telephone, when connected together such that a speaker and a microphone of said conventional telephone serve as a speaker and microphone for said cellular telephone.

9. A method of using a cellular telephone comprising connecting said cellular telephone to a conventional telephone, dialing via said cellular telephone and speaking, and listening using a speaker and a microphone of said conventional telephone.

10. A method according to claim 9, wherein said cellular telephone is connected via a handset socket of said conventional telephone.

11. A method according to claim 9 or claim 10, wherein said cellular telephone is connected via a telephone line input socket of said conventional telephone.

12. A method according to claim 10, further comprising the step of connecting a handset of said conventional telephone and said cellular telephone respectively to a connector, and connecting said connector to said handset socket of said conventional telephone.
